# EUROPEAN PATENT APPLICATION

(11) **EP 1 065 906 A2**
(43) Date of publication of application: **03.01.2001**
(21) Application number: 00305529.0
(22) Date of filing: 30.06.2000
(51) Int. Cl.: H04Q 11/04, H04L 12/64, H04M 11/06

(54) **Providing access to a telecommunications network**

(30) Priority: 30.06.1999 US 345551
(71) Applicant: Nortel Networks Limited, Montreal, Quebec H2Y 3Y4 (CA)
(72) Inventor: Dyke, Peter, Saffron Waldon, Essex (GB); Dyer, Michael, Stansted, Essex CM24 8HG (GB)
(74) Representative: Ryan, John Peter William

(57) **Abstract**

Voice and data services are delivered to subscribers from a Tier 2 exchange via an optical fibre path to a local distribution unit to which the subscribers are coupled by copper loops. Each subscriber is served via a respective line card at the exchange. Coupling over the fibre path is effected by digitizing analogue signals from the line cards and multiplexing the digitized signals together. At the distribution unit, the digitized signals are de-multiplexed and their analogue form is recovered for delivery over the subscriber loops. In a further embodiment, the technique can be used over a single subscriber line, e.g. to provide data services over a long loop that would otherwise have insufficient bandwidth for such services.

## Description

### FIELD OF THE INVENTION

This invention relates to arrangements and methods for providing subscriber access to telecommunications networks.

### BACKGROUND TO THE INVENTION

There is increasing activity within the Telecoms industry as competition intensifies between the traditional service providers and the new entrants, e.g. the CATV operators. All network operators are becoming increasingly conscious of both capital and operating costs, and are seeking to provide a range of new services to capture or retain market share.

A number of the new operators, particularly in the UK, have chosen to deploy street cabinets in preference to local exchanges as a method for connecting a variety of customers to their new networks. This is making incumbent operators reconsider their current network practices of using conventional local telephone exchanges and long lengths of copper pairs or subscriber loops, especially as these may not have the capability for carrying the various broadband services that are now being offered by the new operators. It will be appreciated that the bandwidth-distance capability of the subscriber loop will limit the distance over which a digital service may be provided, this distance becoming shorter with increasing bit rate. For example, an HDSL 2 Mbit/s service is restricted over a copper conductor pair to distances below about 4km, an ADSL 4 Mbit/s service to distances below about 3 km, and a VDSL 8 Mbit/s service to less than 1 km. Indeed, in some systems where very long subscriber loops are employed, it may be infeasible to offer any of these new broadband services. This constraint has restricted the introduction of these services by the traditional operators, particularly the potentially higher revenue earning high bit rate services, and has thus limited the ability of the incumbent operators to compete effectively in the deregulated market.

One approach to this problem that has been considered by the incumbent operators is to follow the practice of the new operators and effectively move the local exchange closer to a group of subscribers by the installation of a street cabinet serving those subscribers via respective line cards and short subscriber loops. However, this is generally considered to be an unattractive solution. Firstly, there is the high capital cost of installing and operating the line cards. Current line cards have a relatively high power consumption, and different line cards are required for each service provided. This entails not only the provision of expensive power supplies in the street cabinets, but also there is a constant need for site visits by engineers to install, change or maintain the line cards in response to customer requests and service churn. This latter requirement involves a considerable overhead cost to the operator. Secondly, the 'in-cabinet' processing that is required, to adapt digital signals from the fibre feeders into analogue signals, typically discrete multi-tone (DMT) signals in the range 50kHz to 1.1Mhz, suitable for transmission over the subscriber loops, is expensive to install and maintain, especially when broadband services are added to the service package or service mix that is delivered to the subscriber.

### SUMMARY OF THE INVENTION

An object of the invention is to minimize or to overcome the above disadvantage.

A further object of the invention is to provide an improved arrangement and method for providing subscriber access to a telecommunications network.

Another object of the invention is to provide an improved arrangement and method for delivering voice and data services to a telecommunications subscriber.

According to a first aspect of the invention, there is provided a method of carrying communications signals over a path between a line card and a subscriber station, said path incorporating an electrical portion and an optical fibre portion, the method comprising transporting said signals in an analogue format over said electrical portion of the path, and transporting said signals in a digital format over said optical fibre portion of the path.

According to another aspect of the invention, there is provided an arrangement for delivering telecommunications services comprising analogue signals from an exchange to a subscriber, the arrangement comprising; a subscriber connection to the exchange consisting of a first optical fibre path and a second electrical path, means for digitizing said analogue signals for transmission over said optical fibre path, and means for recovery of said analogue signals from the digitized signals for delivery to the subscriber over the electrical path

According to another aspect of the invention, there is provided an arrangement for delivering telecommunications services comprising analogue signals from an exchange to a group of subscribers via a local distribution unit from which said subscribers are served via respective conductive loops, the arrangement comprising analogue to digital conversion means for converting said analogue signals to corresponding digital signals on an optical carrier, an optical fibre path whereby said digital signals are transported to said local distribution unit, and digital to analogue conversion means disposed at said local distribution unit for recovering said analogue signals for delivery to said subscribers over the respective subscriber loops.

According to a further aspect of the invention, there is provided a method of transporting a plurality of analogue communications signals each comprising voice and/or data over a path between an exchange and a plurality of subscriber stations, said path incorporating a first optical fibre path and a second electrical path serving said subscriber stations, the method including converting each said signal to a corresponding digital signal, multiplexing the digital signals together to form a multiplexed signal, transmitting the multiplexed signal over said optical fibre path, demultiplexing and decoding the multiplexed digital signals to recover said analogue signals, and transmitting said recovered analogue signals to said subscriber stations over the electrical path.

According to a further aspect of the invention, there is provided an arrangement for transporting a plurality of analogue communications signals each comprising voice and/or data over a path between an exchange and a plurality of subscriber stations, said path incorporating a first optical fibre path and a second electrical path serving said subscriber stations, the arrangement comprising means for converting said analogue signals to corresponding digital signals, means for multiplexing together a plurality of said digital signals for transmission over the optical fibre path, means for demultiplexing said multiplexed signals transmitted over said optical fibre path, and means for recovering said analogue signals from said demultiplexed digital signals for transmission to said subscriber stations over the electrical path.

The arrangement, in effect, provides a broadband overlay to existing POTS/ISDN narrowband services from the exchange in the first instance, prior to this carrying the narrowband traffic at a later date, thereby allowing the exchange to be closed when required. An operator can therefore roll out broadband services quickly by bypassing the exchange which initially still continues to provide narrowband services. This allows new growth revenues to be quickly gained in addition to revenues from existing services.

Advantageously, the voice traffic is carried in ATM cells using the adaptation layer 2 (AAL2) protocol. This is an ATM protocol that is able to carry narrowband voice traffic over ATM while still maintaining the (short) delay requirements needed for satisfactory transmission of delay sensitive traffic such as voice. This solution allows both broadband and narrowband traffic to be delivered to customers over integrated transmission links, such as ADSL.

### BRIEF DESCRIPTION OF THE DRAWINGS

Embodiments of the invention will now be described with reference to the accompanying drawings in which:-
Figure 1 is a schematic diagram of a conventional network access arrangement;
Figure 2 is a schematic diagram of a further conventional network access arrangement
Figure 3 is a schematic diagram of a network access arrangement according to a first embodiment of the invention;
Figure 4 shows the functional detail of the access arrangement of figure 3;
Figure 5 shows a development of the access arrangement of figure 3; and
Figure 6 shows the adaptation of the access technique to a single subscriber line.

### DETAILED DESCRIPTION OF PREFERRED EMBODIMENTS

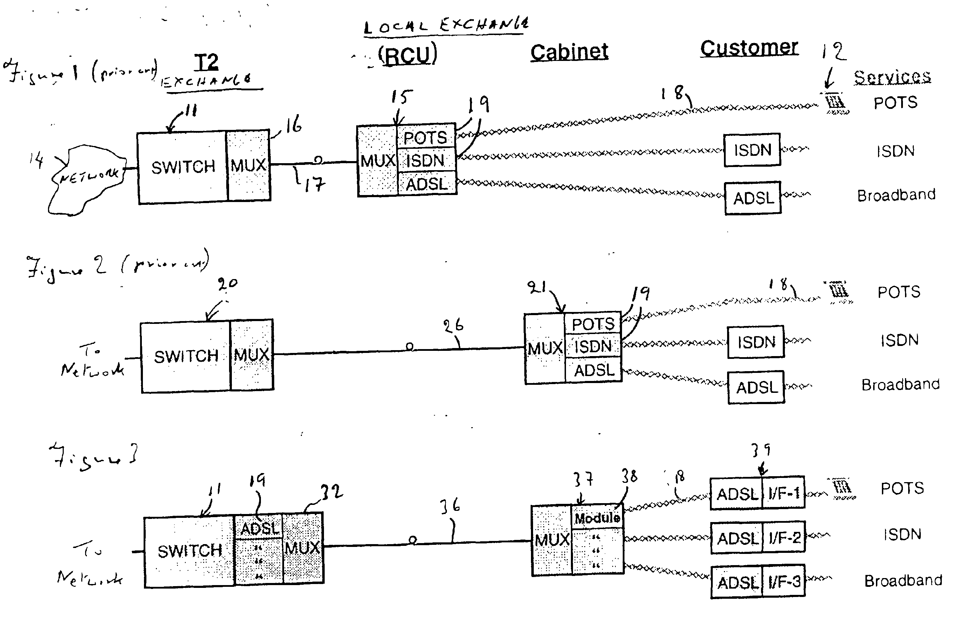

Referring first to figure 1, which is introduced here for comparative and explanatory purposes, this shows in partly schematic form an traditional arrangement for delivering telecommunications services from a switch 11, i.e. a Tier 2 switch, to a subscriber station 12. Typically, the switch 11 is coupled to a narrow band, e.g. synchronous or plesiochronous TDM network 14. Alternatively, the switch 11 may interface with a broad band ATM or IP network. The switch 11 feeds a remote concentrator unit (RCU) or local exchange 15 via a multiplexer 16 and an optical link 17, the traffic over the link 17 being in the TDM format. At the local exchange or RCU 15, this TDM traffic is de-multiplexed and the corresponding analogue signals are recovered for transmission to the subscribers. The local exchange 15 serves a number of subscriber stations 12 each via a respective subscriber loop 18 terminating on a corresponding line card 19 in the local exchange. These line cards are installed on a per-customer basis according to the services to be delivered to that customer via the subscriber loop. Thus, some customers will have a POTS line card, while others may have ADSL or ISDN line cards to provide data services to those subscribers. These data services are carried over the subscriber loop in analogue format in frequency bands above the voice band, e.g. in a discrete multi-tone (DMT) format, and are filtered or 'split' at the subscriber station to separate the voice and data traffic.

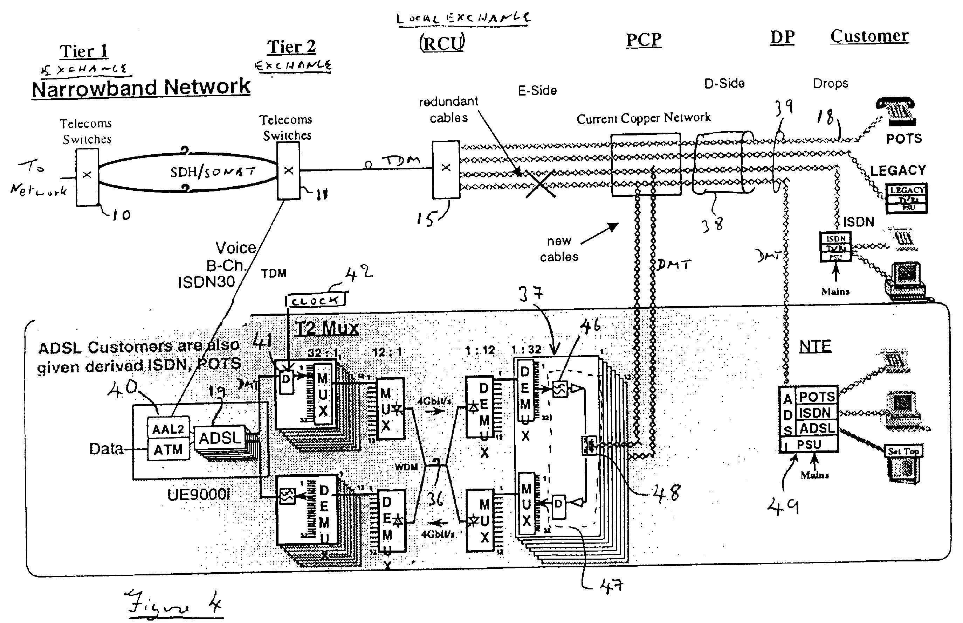

Referring now to figure 2, which is also introduced here for comparative and explanatory purposes, this shows a typical arrangement currently employed by CATV providers for delivering telecommunications services to subscribers. In this arrangement, a local group of subscribers is served from a street cabinet 21 fed with a TDM stream from a remote switch 20 via an optical fibre path 26 and provided with appropriate line cards 19 for the respective subscribers. Within the cabinet, the incoming TDM stream is de-multiplexed and decoded to recover the analogue subscriber signals which are then transmitted to the subscribers via the respective line cards. In order to maximize the effective bandwidth of the final copper connection 18 to the subscriber, the cabinet is locally sited close to the subscribers in order to reduce this distance to a minimum.

Referring now to figure 3, this depicts an exemplary network access arrangement according to a first embodiment of the invention. In this arrangement, the subscriber line cards 19 are disposed in a switch 11, e.g. a Tier 2 switch. By siting the line cards at the switch rather than in a street installation, their physical size and relatively high power demands can readily be accommodated and the need for local site visits by engineers to service and maintain the line cards is avoided.

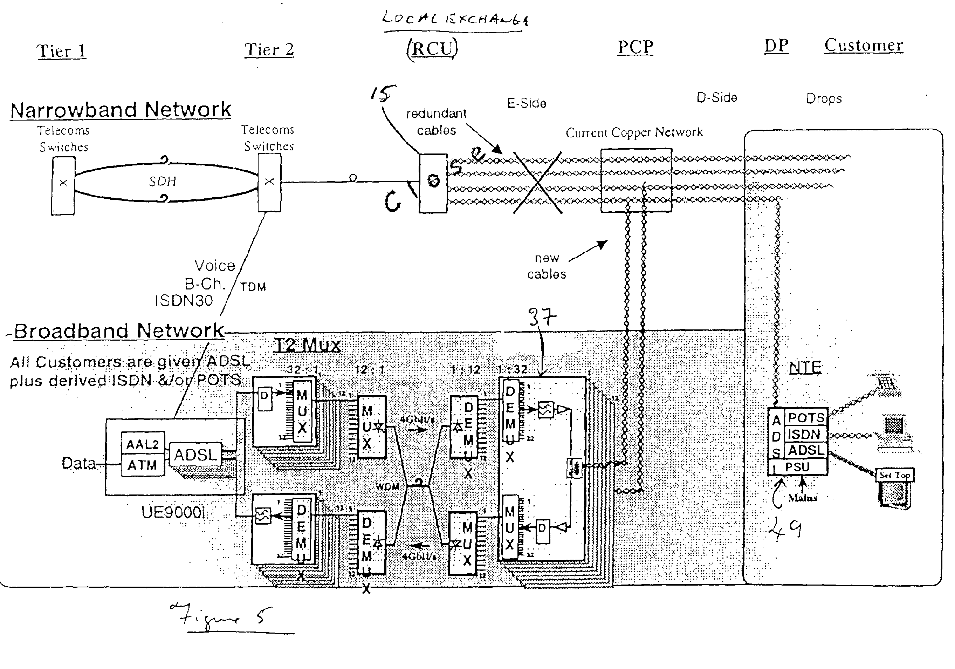

The output analogue signals from the line cards 19 are converted to corresponding digital signals which and are then multiplexed by multiplexer 32 for transmission over a fibre path 36 to a street cabinet installation comprising a local distribution unit 37 which may be sited adjacent an existing RCU or (as shown in figure 4), between an existing RCU and a group of subscribers where it perform sthe function of a primary connection point. Within the local distribution unit 37, the digitized signals received from the fibre path are de-multiplexed and decoded to recover their original analogue format for delivery via subscriber modules 38 over the respective subscriber loops 18 to the individual subscribers. These subscriber modules are simple low power devices that perform an interface function to the subscriber loop. This enables the provision of the local distribution point 37 as a low cost structure having relatively small dimensions. Each subscriber has a respective network termination unit 39 which decodes the received analogue signals to recover the voice and data therefrom.

Figure 4 shows the coupling between the switch 11 and the local distribution unit 37 in further detail. By way of example, the switch 11 is shown as a Tier 2 switch coupled to a Tier 1 switch 10 of a higher hierarchical level and which in turn is interfaced to a transport network 14. This network 14 may be synchronous, plesiochronous or asynchronous as discussed above.

At the switch 11, the POTS (TDM) signals and ISDN signals from the narrow band network are packaged into ATM cells on a per-user basis by ATM interface 40, e.g. using the ATM adaptation layer 2 (AAL2) protocol which minimizes the assembly delay. These cells are fed together with the data traffic, which will normally be already packaged in ATM cells, into the line cards 19, e.g. ADSL line cards. The line cards 19 each output the voice and data cell traffic in an analogue format suitable for transmission over copper pairs. Advantageously, the output traffic from each line card is carried on a number of carrier frequencies in a discrete multi-tone (DMT) format. Each of these DMT carriers is over-sampled by a D-type flip-flop 41 which is clocked from clock 42, typically at a clock rate of about ten times the data rate, to form a corresponding digital channel, e.g. using PDM. Thus, if the data rate is 1 Mbit/s, the clock rate will be 10Mhz. This provides a low cost but effective method of digitizing the signal. It will however be appreciated that, in some applications, an n-bit analogue to digital converter may be used for this purpose.

The digital channels so derived are then multiplexed by multiplexers 42, 43 into groups of around one hundred or more channels, e.g. using synchronous TDM, and are transmitted digitally over the fibre feeder 36 to the local distribution unit 37. In the embodiment shown, the multiplexers are respectively 32:1 and 12:1 multiplexers, but it will be appreciated that these ratios are arbitrary and that appropriate ratios will be determined by the operator. Conveniently, this traffic will be transmitted at a rate of about 4Gbit/s over the fibre path. Advantageously, a number of such channel groups are transmitted simultaneously using wavelength division multiplexing (WDM).

At the local distribution unit or cabinet 37, each channel group is de-multiplexed into the individual digital channels by demultiplexers 44, 45. Each channel's digital signal is then decoded, using a simple filter 46, e.g. a low pass filter, to recover its original analogue format, e.g. DMT. Alternatively, a digital to analogue converter may be employed for this purpose. These analogue signals comprising voice and data cell streams are then transmitted in their DMT format from customer-facing modules 47 over the copper drops, to a network termination unit 49 installed in the customer premises. The incoming ADSL signals received at the customer premises are decoded by the network termination unit 49 into the original voice and data signals. Upstream transmission from the customers uses an analogous process of digitizing, multiplexing for transmission from the distribution unit or street cabinet over the fibre path. Combining the downstream and upstream signals for transmission over the subscriber loop 18 is effected e.g. by the use of a hybrid transformer 48.

The subscriber loops 18 from the distribution unit will normally be bundled into a multi-pair cable 538 which breaks out into individual subscriber drops at a distribution or star point 39.

The arrangement of figure 3 and 4 provides a facility for phased introduction. Thus, as shown in figure 4, those customers requiring data services are served via the local distribution unit 37 while others requiring only POTS may continue to be supplied via the existing subscriber loops from the local exchange or RCU 15. This renders some of the cabling from the exchange 15 redundant and, if desired, this cabling can be removed. The development of this process is illustrated in figure 5 where all subscribers, irrespective of their service requirements, are now served from the local distribution unit 37 thus allowing closure of the now redundant local exchange and the removal of any redundant cabling. In this arrangement, all voice traffic is delivered to the subscriber in ADSL format and every subscriber, including those only requiring POTS, have a respective network termination unit to recover the voice traffic.

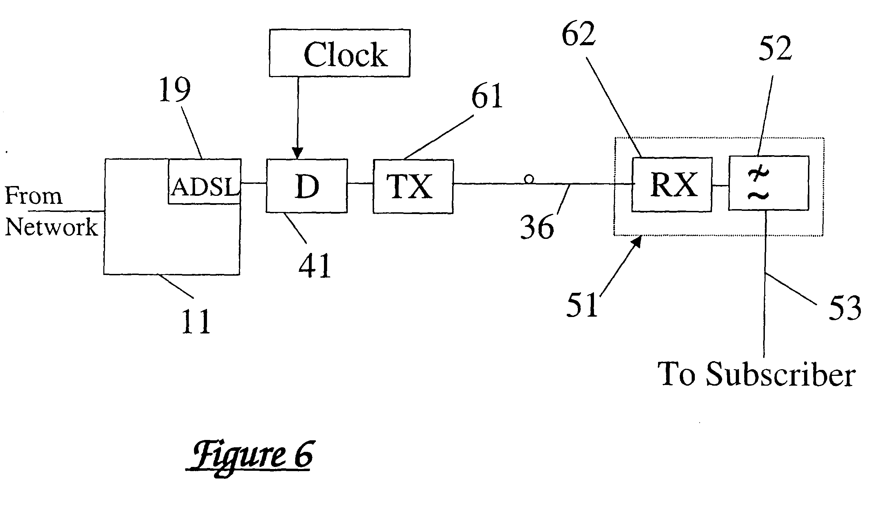

Figure 6 illustrates the application of the technique to a single subscriber line, e.g. in a rural area where excessively long subscriber loops are employed for serving customers remote from the exchange. The subscriber is served via an ASDL line card 19 from the exchange 11. This exchange can be either a Tier 2 or a local exchange. The analogue output comprising a set of DMT carriers from the line card is over-sampled by a clocked D-type flip-flop 41 to generate a corresponding digital signal which is launched via optical transmitter 61 as a corresponding optical signal on to a fibre 36. The signal is carried on the fibre path to a transceiver unit 51 appropriately sited to allow connection to a copper cable 53 connected to the subscriber premises. This transceiver unit 51 incorporates an optical receiver 62 and a low pass filter 52 which recovers the original analogue signal from the digital stream received over the fibre path. The arrangement provides a low cost but effective method of extending the distance over which a data service may be provided from an exchange to a subscriber. It will be understood that an analogous process is used for upstream transmission from the subscriber station to the exchange.

It will be understood that the above description of preferred embodiments is given by way of example only and that various modifications may be made by those skilled in the art without departing from the spirit and scope of the invention.

## Claims

1. A method of transporting voice and data communications signals over a path between an exchange and a subscriber station, said path incorporating an optical fibre portion and an electrical portion, the method comprising transporting said signals in an analogue format over said electrical portion of the path, and transporting said signals in a digital format over said optical fibre portion of the path.

2. A method of transporting a plurality of communications signals each comprising analogue voice andlor data over a path between an exchange and a plurality of subscriber stations, said path incorporating a first optical fibre portion and a second electrical portion serving said subscriber stations, the method including converting each said signal to a corresponding digital signal, multiplexing the digital signals together to form a multiplexed signal, transmitting the multiplexed signal over said optical fibre portion of the path, demultiplexing and decoding the multiplexed digital signals to recover said analogue signals, and transmitting said recovered analogue signals to said subscriber stations over the electrical portion of the path.

3. A method as claimed in claim 2, wherein said communications signals are transported on a plurality of carriers in a discrete multi-tone format.

4. A method as claimed in claim 3, wherein said communications signals are converted to said digital form by over-sampling of said carriers so as to provide a pulse density modulated (PDM) signal.

5. A method as claimed in claim 5, wherein said over-sampling is effected via a clocked D-type flip-flop circuit.

6. A method as claimed in claim 5, wherein said recovery of the analogue signals is effected by low pass filtering of said de-multiplexed digital signals.

7. A method as claimed in claim 2, wherein said multiplexing comprises synchronous TDM.

8. A method as claimed in claim 7, wherein said multiplexing includes wavelength division multiplexing.

9. An arrangement for delivering telecommunications services comprising analogue signals from an exchange to a subscriber, the arrangement comprising; a subscriber connection to the exchange consisting of a first optical fibre path and a second electrical path, means for digitizing said analogue signals for transmission over said optical fibre path, and means for recovery of said analogue signals from the digitized signals for delivery to the subscriber over the electrical path.

10. An arrangement for delivering telecommunications services comprising analogue signals from an exchange to a group of subscribers via a local distribution unit from which said subscribers are served via respective conductive loops, the arrangement comprising analogue to digital conversion means for converting said analogue signals to corresponding digital signals on an optical carrier, an optical fibre path whereby said digital signals are transported to said local distribution unit, and digital to analogue conversion means disposed at said local distribution unit for recovering said analogue signals for delivery to said subscribers over the respective subscriber loops.

11. An arrangement as claimed in claim 8, wherein said communications signals are transported on a plurality of carriers in a discrete multi-tone format, and wherein said analogue to digital conversion means is arranged to over-sample said carriers so as to provide a pulse density modulated (PDM) signal.

12. An arrangement as claimed in claim 9, wherein said analogue to digital conversion means comprises a clocked D-type flip-flop circuit.

13. An arrangement as claimed in claim 10, wherein said digital to analogue conversion means comprises a low pass filter.

14. An arrangement for transporting a plurality of analogue communications signals each comprising voice and/or data over a path between an exchange and a plurality of subscriber stations, said path incorporating a first optical fibre path and a second electrical path serving said subscriber stations, the arrangement comprising means for converting said analogue signals to corresponding digital signals, means for multiplexing together a plurality of said digital signals for transmission over the optical fibre path, means for demultiplexing said multiplexed signals transmitted over said optical fibre path, and means for recovering said analogue signals from said de-multiplexed digital signals for transmission to said subscriber stations over the electrical path.
